Europäisches Patentamt

European Patent Office

Office européen des brevets

(11) Publication number: **0 180 441**
**B1**

# EUROPEAN PATENT SPECIFICATION

(45) Date of publication of patent specification: **09.08.89**

(21) Application number: **85307769.1**

(22) Date of filing: **28.10.85**

(51) Int. Cl.⁴: **A 23 L 1/226,** A 23 L 1/23, A 23 C 19/08

(54) Manufacture of cheese flavour powder.

(30) Priority: **30.10.84 AU 7900/84**

(43) Date of publication of application:
**07.05.86 Bulletin 86/19**

(45) Publication of the grant of the patent:
**09.08.89 Bulletin 89/32**

(84) Designated Contracting States:
**AT BE CH DE FR GB IT LI LU NL SE**

(56) References cited:
**EP-A-0 006 380**
**BE-A- 780 587**
**FR-A-2 397 156**
**GB-A-1 133 533**
**US-A-3 365 737**

(73) Proprietor: **H.M.O. NOMINEES PTY. LTD.**
**32' Floor, 35 Collins Street**
**Melbourne Victoria (AU)**

(72) Inventor: **Smith, Paul Frederick**
**6 Barton Road**
**Clayton South Victoria (AU)**
Inventor: **Geals, Donald William**
**16 Zarro Street**
**Scoresby Victoria (AU)**

(74) Representative: **Carpmael, John William Maurice et al**
**CARPMAELS & RANSFORD 43 Bloomsbury Square**
**London, WC1A 2RA (GB)**

# EP 0 180 441 B1

**Description**

This invention relates to the manufacture of cheese flavour powder.

Cheese flavour powder is conventionally produced by macerating a selected cheese or mix of cheeses, rendering in measured amounts of hot water together with various other food grade ingredients, and raising the mix to pasteurising/emulsification temperatures prior to feeding to a conventional spray drier from which the resultant powder is collected and bagged.

This conventional process suffers from a number of disadvantages as follows:—

1. Cheese varies considerably in flavour profiles and physical properties and requires careful selection and processing in order that end flavour and physical properties are sufficiently protected to meet consumer requirements.

Under the most controlled conditions, end flavour is variable and its intensity cannot be assured.

2. For large scale manufacture of cheese flavour powder a considerable inventory of cheese is required, creating cost pressures in financing and storing bulk cheese for long periods under controlled temperatures demanding refrigeration, and in costly insulated storage areas.

3. Labour costs of the overall process are high; cheese must be decartoned, unwrapped, cut and macerated prior to feeding to the mixing tank.

4. Addition of ingredients such as whey powder to the formulated mix requires the addition of more water before drying at a solids concentration of about 40%, thereby substantially increasing energy costs of batch preparation and eventual spray drying.

5. Such a process also requires the use of sodium based emulsifying salts, resulting in increased sodium levels in the end product.

6. Heat treatment associated with rendering macerated cheese and other formulated ingredients causes substantial flavour losses due to the volatility of most naturally occurring cheese flavour compounds, because of the absence in the mix of sufficient suitable proteins or other encapsulating substances, which would prevent their escape.

7. Furthermore, the extent of heat treatment required for rendering, emulsifying and pasteurising the mix tends to further denature the available protein, and may cause oiliness, eventual flavour deterioration due to oxidation of the fat, and a tendency for the powder to lump under storage conditions.

EP—A—0006380 provides a method of producing cheese flavoured protein concentrates from a sterilised concentrated protein material. The dry solids content and fat content of the concentrates are first adjusted and the material is then homogenised. The required flavour is then acquired by subjecting the material to an enzyme treatment and an inoculation with flavour-producing ferments.

It is an object of the invention to provide an improved process for the production of cheese flavour powder.

The invention accordingly provides a process for manufacturing cheese flavour powder comprising:

treating a volume of unpasteurised milk in a manner effective (i) to enhance lipolysis of triglycerides in the milk to release short chain fatty acids and/or their derivatives which are the principal components of cheese flavour;

(ii) heating the milk to a temperature sufficient to cause previously uncoagulated whey protein naturally occurring in the unpasteurised milk to encapsulate said cheese flavour components, thereby facilitating subsequent conversion to powder; and

(iii) converting the resultant product to a powder.

Using this process, it is possible to substantially reduce the use of cheese and hence the attendant storage and handling problems. The important short chain fatty acids, which together with their derivative aldehydes and ketones are the principal components of cheese flavour and comprise in particular butyric, caproic, caprylic and capric acids, are volatile and liable to be readily lost in processing involving cheese maturing, storage and maceration, but are preserved and enhanced in the final product by processing directly into cheese flavour powder in accordance with the invention. Moreover, the process of the invention avoids the coagulation of the milk proteins which normally occurs in the manufacture of cheese. Whey proteins in particular, because of their long chain hydrophilic structure, are excellent encapsulants and an adequate level of such material is essential for the successful retention of flavour during conversion of the mix to a dried powder. Without effective encapsulating material most volatile cheese flavouring acids would be lost in subsequent processing and storage. Because of the absence of adequate contained encapsulating material, the traditional process for the production of cheese flavour powder requires the addition of emulsifiers, such as sodium based emulsifying salts, which result in undesirable levels of sodium or call for expensive caseinate ingredients.

As indicated, the inventive process includes treating raw milk to enhance lipolysis of the triglycerides in the milk. A preferred novel feature of the invention is the utilisation for this purpose of the enzymes naturally present in the milk, for example naturally occurring enzymes or incidental bacterial enzymes, and particularly the lipolytic enzymes capable of hydrolysing fats and oils and thus liberating fatty acids including the aroma producing short chain fatty acids present in the milk fat. Because of possible health hazards, milk for public consumption, including most milk for cheese manufacture, has to be subjected to pasteurisation, a heat treatment designed to destroy pathogenic micro-organisms which may be incidentally present in the milk. It happens, however, that the pasteurisation treatment either substantially

2

or totally inactivates the lipolytic enzymes and also other beneficial bacterial enzymes present in the milk, thus rendering the milk substantially inert as a medium for biochemical change.

This deleterious affect of pasteurisation on cheese flavour has been recognised and to counteract it, lipolytic enzyme preparations, derived from kids' or lambs' throat glands, have been introduced as additives to the milk in the manufacture of numerous cheese varieties, in order to promote the release of the short chain fatty acids, necessary for a full cheese flavour spectrum. In accordance with the invention, however, such additions are unnecessary as raw i.e. unpasteurised milk is treated to enhance lipolysis: pasteurisation can be effected if desired at any later convenient stage.

As indicated, the other principal feature of the invention is the utilisation of whey proteins as an encapsulating material, which, being non-volatile, holds the volatile flavour components within the product. Because they whey products are not coagulable by rennet, most of them are lost in the whey in the traditional cheese making process and therefore are not present in the cheese in sufficient amounts to serve as flavour encapsulants. Yet, because of their nature, they are eminently suitable for this function. In fact, they are considered more effective than most of the gums employed by flavour essence manufacturers for this purpose. But it is not only the structure of the whey proteins that renders them so useful for encapsulation. It is also their response to heat: the colloidal particles of the whey proteins tend to coalesce when heated. The invention provides a process by which this potential utility of the natural whey proteins can be realized.

In the process of coalescing, the whey proteins aggregate, locking within their framework the free cheese flavour components and thus preventing their escape into the atmosphere.

Said treatment of the milk preferably includes storage of the milk for a period and at a temperature selected to enhance said lipolysis. A preferred period of storage is 6 to 12 hours and a preferred temperature is in the range 7° to 10°C. Below 7°C, the lipolysis process in unacceptably slow while above 10°C other degradation such as uncontrolled fat splitting begins to occur. A storage period below 6 hours results in a lower level of lipolysis while storage for more than 12 hours is of no additional advantage and thus becomes unjustifiable on economic grounds.

The milk treated as just described, with or without extra ingredients, may then be subjected to evaporation by heat until the desired solids content is achieved. Most preferably, such heating is to a temperature of about 80°C and the most preferred solids content is in the range 40 to 50%. It is during this heat treatment and consequent concentration of the mix into a smaller volume, that there occurs the aforedescribed encapsulation by the whey proteins of the cheese flavour components. It is also noted that this heat treatment should destroy any pathogenic micro-organisms and thus may be viewed as a delayed but effective pasteurisation.

The unpasteurised milk treated in accordance with the invention is typically raw whole milk standardised to a desired total solids to fat ratio, for example by addition of buttermilk or unpasteurised cream.

Advantageously, the treated milk, preferably as said concentrate and preferably with agitation, is mixed with a relatively small amount of selected natural cheese and/or of an enzyme-modified cheese prior to said conversion to a powder, in order to enhance desirable flavour characteristics in the powder.

To the treated milk may be added skim milk, buttermilk or blends thereof or reconstituted or re-wetted whole milk, skim milk, buttermilk, butter oil or blends thereof.

Food grade acids may be added to the concentrate for flavour purposes and for adjustment of the pH to a preferred range 5.2 to 5.7. The mix may then be pumped via a colloiding system for intimate integration and is preferably maintained at a temperature between 50° and 70°C, most preferably about 60°C, prior to conversion to a powder.

The conversion of the mix to a powder is preferably effected in a spray drier of conventional construction, to which the aforesaid integrated heated mix may be fed after retention in a holding silo for a preferred period of at least two hours. The dwell time in the holding silo further enhances flavour development, through interaction of the added cheese(s) with components in the milk concentrate. This further intensifies the base flavour present in the milk concentrate and improves the quality of the spray dried flavouring.

The advantages of the process of the invention are substantial. First and foremost, the financial outlay for the purchase and the storing of substantial quantities of cheese is avoided: for example, 90% less cool room space may be required. By processing with a higher solids contents in the mix, higher throughput and significant energy savings can be obtained. A substantial quantity of cheese, a costly product, is eliminated.

There are substantial savings in labour costs as the decartoning, unwrapping and then cleaning of substantial quantities of cheese, and considerable waste disposal problems are avoided. In general, the process of the invention substantially eliminates the need for human involvement in the handling of the product and allows a stricter control of the processing environment. The process substantially reduces off-flavours which may arise in flavourings produced in conventional cheese based processes.

It is estimated that the cost benefits relative to the traditional process are at least of the order of 50%.

As earlier indicated, the invention permits the use of reconstituted or re-wetted whole milk, skim milk or buttermilk powders or blends thereof, in substantial amounts. The process may also be effected with or without additions of part hydrogenated vegetable oil, salt, colour, spices, together with small amounts of enzyme modified cheeses and/or small amounts of selected raw milk cheese to adjust the final flavour to desirable level and spectrums.

It should also be understood that the process of the invention is applicable to the use of polyunsaturated milk, whether obtained by altering the milk animal's metabolism to incorporate polyunsaturated fatty acids or vegetable oils, or by admixing such acids or oils to the milk or the mix.

The invention is also directed to a cheese flavour powder in which the bulk of the components of the cheese flavour, typically short chain fatty acids, in particular butyric, caproic, caprylic or capric acids or derivative aldehydes or ketones thereof, are encapsulated by whey proteins. In a preferred aspect, the invention affords a cheese flavour powder manufactured by the afore-described process.

## Example 1

Cheddar cheese flavour powder for use in snack foods, with a final desired specification of 24% w/w butterfat and 7% w/w sodium chloride, was produced as follows:—

Raw whole milk previously held at 7°C was standardized by the addition of buttermilk at 37°C to a total solids to fat ratio of 9.6 to 2.65. The thus standardized milk was held for six hours at 9°C under constant agitation, then heated to 80°C in a plate heat exchanger and concentrated in a triple effect evaporator to 45% w/w total solids. The concentrate left the evaporator at 37°C and was fed to a mixing facility. It should be noted at this point that concentration of the milk might equally be achieved by ultrafiltration at suitable temperatures.

After a holding time of 75 minutes, the quantity of total milk solids in the mix was determined and, on a total solids basis, 1.7% w/w of selected enzyme-modified cheese solids and 4% w/w of selected natural cheese solids were added to the milk concentrate. An appropriate amount of salt was separately dissolved then pumped into the concentrate mix. A measured amount of a food grade organic acid, a blend of lactic and citric acids, was diluted five-fold and added to achieve a pH of 5.6.

The concentrate mix was then passed through a colloid mill for final integration and reheated in a tubular heat exchanger to 60°C en route to a tank where it was held for two hours. The product was then spray dried, in a conventional spray drier fed by a high pressure pump, to a final moisture of 3.5% w/w ± 0.5% w/w.

Allowing 48 hours for product and flavour stabilization, the product was organyleptically evaluated and compared with a product made by conventional methods and of similar composition. The following table compares the fatty acids present in mg/kg of total solids for the cheese flavour powder produced according to the example and a commercial cheddar cheese flavoured powder produced by conventional methods from macerated cheese.

### TABLE 1

Fatty acids present, expressed in mg/kg of total solids

| SAMPLE | BUTYRIC | CAPRIC | CAPROIC | CAPRYLIC |
|---|---|---|---|---|
| Standard process cheese powder | 40 | 65.5 | 20 | 20 |
| Product made by claimed process | 135 | 112.5 | 77.5 | 65 |

The trial product was found to have a full and true cheddar cheese flavour with a pleasing aftertaste and was preferred by tasters to the commercial product mentioned above which had a blander flavour.

## Example 2

A Swiss cheese flavour powder with a final desired specification of 23% w/w butterfat and 4% w/w sodium chloride was produced as follows:

Raw whole milk previously held at 7°C was standardised by the addition of buttermilk at 38°C to the appropriate desired total solids to fat ratio.

This standardised milk was held for six (6) hours at 9°C under constant agitation, preheated to 80°C in a plate heat exchanger and concentrated in a triple effect evaporator to 42.6% w/w total solids.

The concentrate left the evaporator at 37°C, the quantity of total milk solids in the mix was determined and, on a total solids basis, 2.4% w/w of selected enzyme-modified Swiss cheese solids and 3% w/w of selected natural Swiss cheese solids were added to the concentrate. An appropriate amount of salt was separately dissolved and added to the concentrate mix.

A measured amount of a food grade organic acid, a blend of propionic and lactic acids, was diluted five fold and added to achieve a pH of 5.6.

4

The concentrate mix was then passed through a colloid mill and reheated in a tubular heat exchanger to 60°C and held for 4 hours. The product was then spray dried, in a conventional spray drier fed by high pressure pump, to a final moisture of 3.8% w/w.

Allowing 48 hours for product and flavour stabilisation the product was organolepticoly evaluated and was found to be a fine textured powder having a very distinctive Swiss cheese flavour and aroma.

Example 3

A Bleu cheese flavour powder with a final desired specification of 28.5% w/w butterfat and 5.6% w/w sodium chloride was produced as follows:

Raw whole milk previously held at 7°C was standardised by the addition of unpasteurised cream at 38°C to the appropriate desired total solids to fat ratio.

After holding for six (6) hours at 9°C under constant agitation the standardised milk was preheated to 80°C and concentrated to 46.5% w/w total solids.

The concentrate left the evaporator at 37°C and after a holding time of 75 minutes the quantity of total solids in the mix was determined and, on a total solids basis, 2.6% w/w of selected enzyme modified Bleu cheese solids and 7% w/w of selected natural Bleu cheese solids were added. An appropriate amount of salt was added to the concentrate mix.

The pH of the mix was corrected to 5.8 by the addition of lactic acid diluted five fold.

The mix was colloided, preheated to 60°C and held for 2 hours. The product was then spray dried to a final moisture of 3.4% w/w.

After 48 hours, the product was found to have a very distinctive Bleu cheese flavour aroma, and a pleasant textured mouth feel.

Whilst the examples just provided describe the production of cheddar, Swiss and Bleu cheese flavour powders, the process is equally applicable to the production of cheese flavour powders having the flavour characteristics of most known cheese types, e.g. Gouda, Ramoni, Parmesan, by factorial control of the variables embodied in the process.

Similarly, the production of cultural flavour cheese powders may be achieved by the inventive process by the addition of suitable bacterial cultures in place of or in addition to the described preferred step of adding a relatively small amount of selected natural cheese and/or of an enzyme-modified cheese.

Further experiments have shown that powders produced by the process of the invention are highly suited as a cheese coating for snack foods, either singularly or as a component base in specialised blended coatings. With slight compositional changes to suit individual and user requirements, they are also highly suited for use in bakery goods, in soups, sauces and general prepared foods.

**Claims**

1. A process for manufacturing cheese flavour powder, comprising:
treating a volume of unpasteurised milk in a manner effective to enhance lipolysis of triglycerides in the milk to release short chain fatty acids and/or their derivatives which are the principal components of cheese flavour;
heating the milk to a temperature sufficient to cause previously uncoagulated whey protein naturally occurring in the unpasteurised milk to encapsulate said cheese flavour components, thereby facilitating subsequent conversion to powder; and
converting the resultant product to a powder.

2. A process according to claim 1 wherein said treatment of the milk is effective to enhance said lipolysis by enzymes naturally present in the milk.

3. A process according to claim 1 or 2 wherein said treatment of the milk includes storage of the milk for a period and at a temperature selected to enhance said lipolysis.

4. A process according to claim 3 wherein the period of storage is in the range 6 to 12 hours.

5. A process according to claim 3 or 4 wherein said temperature is in the range 7° to 10°C.

6. A process according to any preceding claim wherein said heating to cause encapsulation is to a temperature of about 80°C.

7. A process according to any preceding claim wherein said heat treatment is effective to substantially destroy pathogenic micro-organisms present in the milk.

8. A process according to any preceding claim wherein said unpasteurised milk is raw whole milk standardized to a desired total solids to fat ratio.

9. A process according to any preceding claim further including mixing said resultant product with a relatively small amount of selected natural cheese and/or of an enzyme-modified cheese prior to said conversion to a powder.

10. A process according to any preceding claim wherein the solids content of said resultant product prior to said mixing is in the range 40 to 50% w/w.

11. A process according to any preceding claim further including treating said resultant product to achieve a pH in the range 5.2 to 5.7.

12. A process according to any preceding claim wherein said resultant product is maintained at a temperature in the range 50° to 70°C prior to said conversion to a powder.

13. A process according to any preceding claim wherein said conversion to a powder is effected in a spray drier.

14. A process according to claim 13 wherein said resultant product is held for at least two hours before being fed to the spray drier.

15. A process according to any preceding claim further including mixing said resultant product with a cultured dairy product, whereby to produce a cultural flavour cheese.

16. A cheese flavour powder obtainable by a process according to any of the preceding claims wherein a substantial amount of the components of the cheese flavour are encapsulated by whey proteins, and further wherein the cheese flavour components comprise one or more of butyric, caproic, caprylic or capric acids or derivative aldehydes or ketones thereof.

**Patentansprüche**

1. Verfahren zur Herstellung von Käsearomapulver, umfassend:

das Behandeln eines Volumens an unpasteurisierter Milch auf eine Weise, die wirksam ist, die Lipolyse von Triglyzeriden in der Milch zu steigern, um kurzkettige Fettsäuren und/oder ihre Derivate, die die Hauptkomponenten des Käsearomas sind, freizusetzen;

das Erwärmen der Milch auf eine Temperatur, die ausreicht, um das bisher unkoagulierte, in der unpasteurisierten Milch natürlich vorkommende Molkeprotein zu veranlassen, die Käsearomabestandteile zu verkapseln und dadurch die nachfolgende Umwandlung in Pulver zu erleichtern; und

das Umwandeln des entstehenden Produktes in ein Pulver.

2. Verfahren nach Anspruch 1, bei dem das Behandeln der Milch wirksam ist, um die Lipolyse durch natürlich in der Milch vorhandene Enzyme zu steigern.

3. Verfahren nach Anspruch 1 oder 2, bei dem das Behandeln der Milch die Lagerung der Milch über einen ausgewählten Zeitraum und bei einer ausgewählten Temperatur einschließt, um die Lipolyse zu steigern.

4. Verfahren nach Anspruch 3, bei dem der Zeitraum der Lagerung zwischen 6 und 12 Stunden beträgt.

5. Verfahren nach Anspruch 3 oder 4, bei dem die Temperatur zwischen 7 und 10°C beträgt.

6. Verfahren nach einem der vorhergehenden Ansprüche, bei dem die die Verkapselung bewirkende Erwärmung auf eine Temperatur von etwa 80°C erfolgt.

7. Verfahren nach einem der vorhergehenden Ansprüche, bei dem die Wärmebehandlung wirksam ist, in der Milch anwesende pathogene Mikroorganismen im wesentlichen zu zerstören.

8. Verfahren nach einem der vorhergehenden Ansprüche, bei dem die unpasteurisierte Milch rohe Vollmilch ist, die auf ein gewünschtes Verhältnis von Gesamtfeststoffen zu Fett standardisiert ist.

9. Verfahren nach einem der vorhergehenden Ansprüche, welches weiterhin das Mischen des entstehenden Produktes mit einer relativ kleinen Menge an ausgewähltem natürlichem Käse und/oder an einem enzym-modifizierten Käse vor der Umwandlung in ein Pulver einschließt.

10. Verfahren nach einem der vorhergehenden Ansprüche, bei dem der Feststoffgehalt des entstehenden Produkts vor der Mischung im Bereich zwischen 40 und 50 Gew.% liegt.

11. Verfahren nach einem der vorhergehenden Ansprüche, welches weiterhin das Behandeln des entstehenden Produktes zur Errichung eines pH-Wertes zwischen 5,2 und 5,7 einschließt.

12. Verfahren nach einem der vorhergehenden Ansprüche, bei dem das entstehende Produkt vor der Umwandlung in ein Pulver bei einer Temperatur zwischen 50 und 70°C gehalten wird.

13. Verfahren nach einem der vorhergehenden Ansprüche, bei dem die Umwandlung in ein Pulver in einem Sprühtrockner durchgeführt wird.

14. Verfahren nach Anspruch 13, bei dem das entstehende Produkt mindestens zwei Stunden lang gelagert wird, bevor es in den Sprühtrockner überführt wird.

15. Verfahren nach einem der vorhergehenden Ansprüche, welches weiterhin das Mischen des entstehenden Produktes mit einem Kultur-Molkereiprodukt einschließt, wodurch ein Kultur-Aromakäse hergestellt wird.

16. Käsearomapulver erhältlich durch ein Verfahren nach einem der vorhergehenden Ansprüche, bei dem eine wesentliche Menge der Bestandteile des Käsearomas durch Molkeproteine verkapselt ist und die Käsearomabestandteile mindestens eine Verbindung aus der Gruppe von Buttersäure, Capronsäure, Caprylsäure oder Caprinsäure oder abgeleitete Aldehyde oder Ketone davon umfassen.

**Revendications**

1. Procédé pour fabriquer un arôme de fromage en poudre consistant à:

traiter un volume de lait non pasteurisé d'une manière efficace pour activer la lipolyse des triglycérides du lait afin de libérer les acides gras à chaîne courte et/ou leurs dérivés qui sont les principaux constituants de l'arôme de fromage;

chauffer le lait à une température suffisante pour provoquer l'encapsulation desdits constituants d'arôme de fromage par les protéines de petit-lait non précédemment coagulées qui sont naturellement présentes dans le lait non pasteurisé, en facilitant ainsi la transformation ultérieure en poudre; et

transformer le produit résultant en une poudre.

2. Procédé selon la revendication 1, dans lequel ledit traitement du lait est efficace pour activer ladite lipolyse par des enzymes naturellement présentes dans le lait.

3. Procédé selon la revendication 1 ou 2, dans lequel ledit traitement du lait comprend une conservation du lait pendant une période et à une température choisies pour activer ladite lipolyse.

4. Procédé selon la revendication 3, dans lequel la période de conservation est comprise entre 6 et 12 heures.

5. Procédé selon la revendication 3 ou 4, dans lequel ladite température se situe dans la plage de 7 à 10°C.

6. Procédé selon l'une quelconque des revendications précédentes, dans lequel ledit chauffage destiné à provoquer l'encapsulation est effectué à une température d'environ 80°C.

7. Procédé selon l'une quelconque des revendications précédentes, dans lequel ledit traitement thermique est efficace pour détruire sensiblement les microorganismes pathogènes présents dans le lait.

8. Procédé selon l'une quelconque des revendications précédentes, dans lequel ledit lait non pasteurisé est du lait cru entier normalisé à un rapport voulu de la matière solide totale à la matière grasse.

9. Procédé selon l'une quelconque des revendications précédentes, consistant de plus à mélanger ledit produit résultant avec une quantité relativement petite d'un fromage naturel et/ou d'un fromage modifié par une enzyme sélectionnés, avant ladite transformation en poudre.

10. Procédé selon l'une quelconque des revendications précédentes, dans lequel la teneur en matière solide dudit produit résultant avant ladite opération de mélange se situe dans l'intervalle de 40 à 50% en poids.

11. Procédé selon l'une quelconque des revendications précédentes, consistant de plus à traiter ledit produit résultant pour atteindre un pH situé dans la plage de 5,2 à 5,7.

12. Procédé selon l'une quelconque des revendications précédentes, dans lequel ledit produit résultant est maintenu à une température située dans la plage de 50 à 70°C avant ladite transformation en poudre.

13. Procédé selon l'une quelconque des revendications précédentes, dans lequel ladite transformation en poudre est effectuée dans un séchoir atomiseur.

14. Procédé selon la revendication 13, dans lequel ledit produit résultant est retenu pendant au moins deux heures avant d'être envoyé au séchoir atomiseur.

15. Procédé selon l'une quelconque des revendications précédentes, consistant de plus à mélanger ledit produit résultant avec un produit laitier de culture, pour produire ainsi un fromage à arôme de culture.

16. Arôme de fromage en poudre pouvant être obtenu par un procédé selon l'une quelconque des revendications précédentes, dans lequel une quantité importante des constituants de l'arôme de fromage sont encapsulés par des protéines de petit-lait, et dans lequel, de plus, les constituants d'arôme de fromage comprennent l'un ou plusieurs des acides butyrique, caproïque, caprylique et caprique ou de leurs aldéhydes ou cétones dérivés.